# EUROPÄISCHE PATENTANMELDUNG

(11) **EP 1 927 451 A1**
(43) Veröffentlichungstag der Anmeldung: **04.06.2008**
(21) Anmeldenummer: 06124875.3
(22) Anmeldetag: 28.11.2006
(51) Int. Cl.: B29C 43/20, B60R 13/08, G10K 11/172

(54) **Schottteil sowie Verfahren zur Herstellung eines Schottteils**

(71) Anmelder: Sika Technology AG, 6340 Baar (CH)
(72) Erfinder: Wien, Markus, 5849 Eggenwil (CH)
(74) Vertreter: Sika Patent Attorneys

(57) **Zusammenfassung**

Bei einem Schottteil (1) umfassend einen Trägerteil (2) und einen Teil (3) aus einem schäumbaren Material, absorbiert der Trägerteil (2) durch eine Strukturierung (5, 6) Schall.

## Beschreibung

### Technisches Gebiet

Die Erfindung geht aus von einem Schottteil nach dem Oberbegriff des ersten Anspruches. Die Erfindung geht ebenfalls aus von einem Verfahren zur Herstellung eines Schottteils nach dem Oberbegriff des unabhängigen Verfahrensanspruches.
Die vorliegende Erfindung betrifft allgemein gesprochen Abdichtungs- und Dämpfungselemente für das Abdichten hohler Bauelemente von Fahrzeugen und Verfahren für die Herstellung und Verwendung derartiger Elemente.

### Stand der Technik

Während der Herstellung von Fahrzeugen, Lastwagen und beliebigen Fahrzeugen weisen viele Karosseriekomponenten Bauelemente mit Hohlräumen auf. Diese Hohlräume verursachen verschiedenste Probleme. Je nach Art des Hohlraumes muss dieser zum Verhindern des Eindringens von Feuchtigkeit und Verschmutzungen, die zur Korrosion der Karosserieteile führen können, abgedichtet werden. Oft ist es auch wünschenswert, die Hohlräume und somit die Karosserie wesentlich zu verstärken, jedoch ihr leichtes Gewicht beizubehalten. Oft ist es auch notwendig, die Hohlräume und somit die Karosserie zu stabilisieren, um Geräusche, die sonst den Hohlraum entlang oder durch diesen hindurch übertragen werden würden, zu reduzieren. Viele dieser Hohlräume weisen eine unregelmäßige Form oder ein enges Ausmaß auf, wodurch es erschwert wird, sie richtig abzudichten, zu verstärken und zu dämpfen.

Aus der EP 0 730 999 sind Bauelemente mit Haltevorrichtungen zum Halten eines schäumbaren Werkstoffes innerhalb eines Hohlprofiles bekannt. Dabei wird ein Stützteil senkrecht zur Längsrichtung des Hohlprofiles angeordnet. Der auf solche und weitere Bauelemente des Standes der Technik einwirkende Schall wird durch diese Abdichtungselemente reflektiert und es werden somit ungenügende akustische Eigenschaften der Abdichtungs- und Dämpfungselemente erhalten.

### Darstellung der Erfindung

Der Erfindung liegt die Aufgabe zugrunde, bei einem Schottteil sowie dem zugehörigen Verfahren der eingangs genannten Art die akustischen Eigenschaften von Abdichtungselementen zu verbessern.

Erfindungsgemäss wird dies durch die Merkmale des ersten Anspruches erreicht.

Kern der Erfindung ist es also, dass der Trägerteil durch eine Strukturierung Schall absorbiert.

Die Vorteile der Erfindung sind unter anderem darin zu sehen, dass durch die Strukturierung des Trägerteiles eine Reduktion des Schalls durch Absorption erreicht wird. Durch die Strukturierung des Trägerteiles wird es zudem möglich, die Herstellung des Trägerteiles zu vereinfachen und das Trägerteil mit dünnerer Wandstärke herzustellen.

Weitere vorteilhafte Ausgestaltungen der Erfindung ergeben sich aus den abhängigen Ansprüchen.

### Kurze Beschreibung der Zeichnung

Im folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- Fig. 1A: einen Querschnitt eines erfindungsgemässen Abdichtungselementes;
- Fig. 1B: eine Draufsicht des erfindungsgemässen Abdichtungselementes aus Fig. 1A;
- Fig. 2: einen Querschnitt eines weiteren erfindungsgemässen Abdichtungselementes;
- Fig. 3: einen Querschnitt eines weiteren erfindungsgemässen Abdichtungselementes;
- Fig. 4: einen Querschnitt eines weiteren erfindungsgemässen Abdichtungselementes;
- Fig. 5: einen Querschnitt eines weiteren erfindungsgemässen Abdichtungselementes;
- Fig. 6: einen Querschnitt eines weiteren erfindungsgemässen Abdichtungselementes.

Es sind nur die für das unmittelbare Verständnis der Erfindung wesentlichen Elemente gezeigt. Nicht dargestellt sind beispielsweise die Hohlräume und - profile in die das Abdichtungselement eingebaut wird.

### Weg zur Ausführung der Erfindung

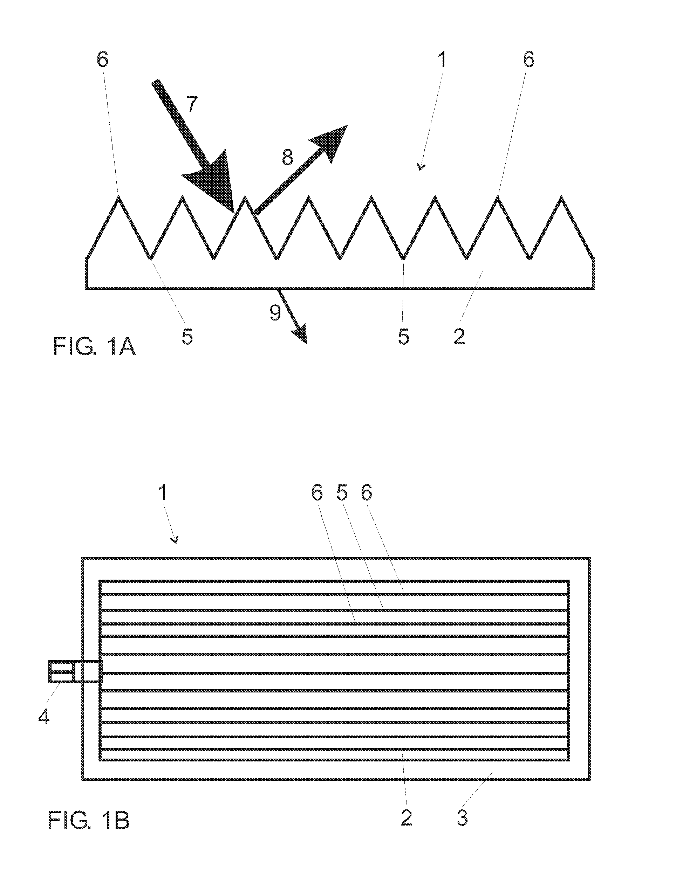

In Fig. 1A und 1B ist ein erfindungsgemässes Dämpfungs- und/oder Verstärkungselement 1 dargestellt, welches im folgenden Schottteil genannt wird. Ein solches Schottteil 1 umfasst einen flächigen Trägerteil 2 und einen Teil 3 aus einem schäumbaren Material. Solche schäumbaren Materialien schäumen bevorzugt unter Einfluss von Wärme auf. Ein bevorzugtes thermisch schäumbares Material wird z.B. unter dem Markennamen SikaBaffle® 240, oder 250 oder 255 vertrieben und ist in den US Patenten 5,266,133 und 5,373,027 beschrieben, deren Offenbarung hiermit eingeschlossen ist. Alternativ kann das thermisch expandierende Material auch Verstärkungseigenschaften haben, solches Material wird z.B. unter dem Markennamen SikaReinforcer® 941 vertrieben, und ist im US Patent 6,387,470 beschrieben, dessen Offenbarung hiermit eingeschlossen ist. Natürlich können auch andere schäumbare Materialien verwendet werden, diese können durch externe Wärmequellen oder interne Wärmequellen, z.B. durch eine exotherme Reaktion aktiviert werden. Das Schottteil 1 wird üblicherweise mittels eines Clips 4 in einem Hohlraum der Karosserie befestigt, es kann jedoch auch anders befestigt werden.

Der flächige Trägerteil 2 besteht üblicherweise aus Polyamid, kann aber auch aus anderen Materialien oder Materialkomponenten hergestellt werden, insbesondere auch aus Metall. Das Trägerteil 2 weist nun erfindungsgemäss Vertiefungen 5 und Erhebungen 6 auf. Diese können durch verschiedene Verfahren hergestellt werden. Eine besonders vorteilhafte Variante ist, dass bei der Herstellung der Spritzgussform die Oberfläche der Form einfach nur geschruppt wird, um eine raue Oberfläche zu erzeugen. Diese wird dann beim Spritzgiessen des Trägerteils auf die Oberfläche des Trägerteiles übertragen und so die Vertiefungen und Erhebungen erzeugt. Bis jetzt wurde jeweils die Spritzgussform an der Oberfläche poliert, was ein sehr zeitaufwändiger und teuerer Prozess ist.

In Fig. 1A ist nun schematisch dargestellt, wie die erfindungsgemässe Schalldämmung funktioniert. Schall 7 trifft auf die Oberfläche des Trägerteiles 2 und wird über die Vertiefungen und Erhebungen zum Teil reflektiert 8 und zum Teil durchgelassen 9. Dadurch kann eine Reduktion des Schalls durch Absorption erreicht werden. In den herkömmlichen Trägerteilen wird der Schall komplett reflektiert.
Des Weiteren kann durch die erfindungsgemässe Ausformung anstelle einer flachen Oberfläche Material gespart werden. Bei einer flachen Oberfläche kann es wie bei einer Membran zur Geräuschentwicklung kommen. Durch die erfindungsgemässe Strukturierung kann dies verhindert werden und eine dünnere Wandstärke des Trägerteiles verwendet werden.

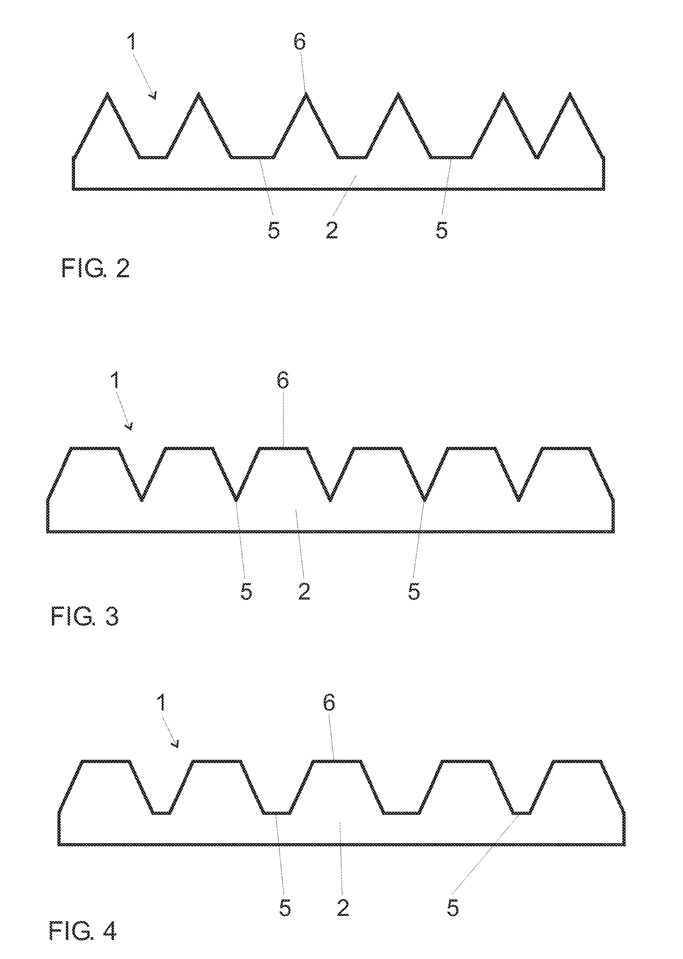

Natürlich kann die Oberfläche der Spritzgussform auch mit spezifischen Vertiefungen und Erhebungen ausgeführt werden. In der Fig. 1 sind dies Spitzen, welche längsförmig oder als Pyramidenstruktur ausgeformt werden können. Gemäss Fig. 2 können die Vertiefungen und Erhebungen auch ungleichförmig verteilt werden. Dadurch kann der Schall noch effektiver verteilt werden und dadurch die gewünschte Dämmung den akustischen Gegebenheiten des Hohlraumes angepasst werden.
In Fig. 3 sind die Erhebungen als Stümpfe ausgeführt und in Fig. 4 sind die Erhebungen und Vertiefungen analog Fig. 2 unregelmässig angeordnet. An sich kann die Ausformung der Vertiefungen und Erhebungen sowie deren Anordnung beliebig sein und muss den jeweiligen akustischen Eigenschaften angepasst werden. Die optimale Verteilung der Vertiefungen und Erhebungen kann durch akustische Messungen der Trägerteile festgestellt werden. Natürlich können am Trägerteil auch auf der unteren Seite solche Vertiefungen und Erhebungen angeordnet werden, deren Ausformung und Anordnung ebenfalls beliebig und den akustischen Eigenschaften angepasst ist.

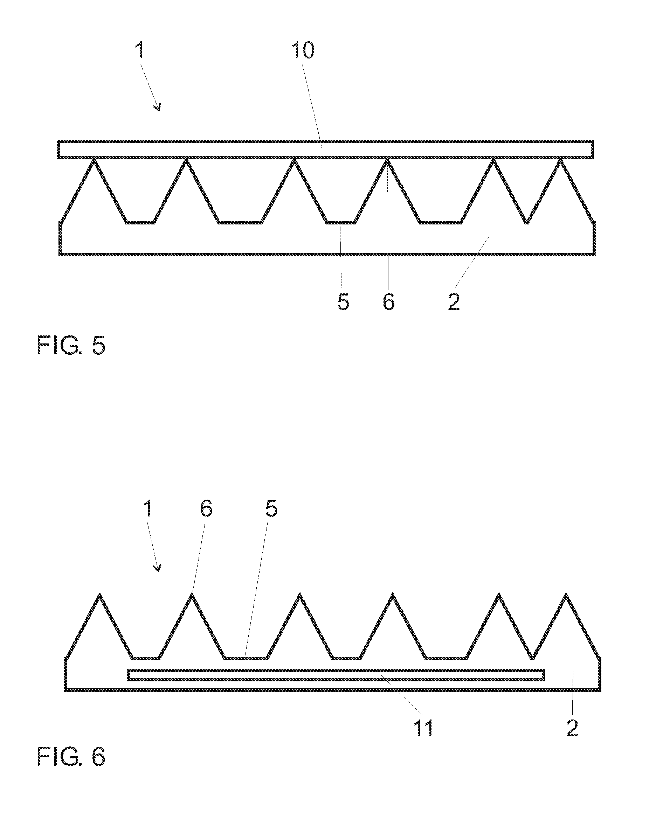

Nach Fig. 5 kann das Trägerteil 2 mit weiteren dämpfenden Materialien versehen werden. Dazu wird hier z.B. ein dämpfendes Material 10 auf dem Trägerteil angeordnet. Diese dämpfenden Materialien können beliebig ausgewählt werden. So können z.B. die vorbeschriebenen thermisch schäumbaren Materialien verwendet werden, oder auch Dämpfungsmaterialien wie SikaDamp®, z.B SikaDamp® 630.
Nach Fig. 6 kann das Trägerteil 2 auch einen Hohlraum 11 aufweisen, welcher z.B. mit Kohlendioxid oder anderen Gasen zur optimalen Dämmung gefüllt ist. Die in den Figuren 5 und 6 gezeigten Trägerteile können natürlich entsprechend dem oben gesagten auch anders ausgeführt werden und werden jeweils den jeweiligen akustischen Eigenschaften angepasst. Das dämpfende Material 10 oder der Hohlraum 11 müssen sich nicht über das gesamte Trägerteil erstrecken und können auch nur in lokalen Bereichen angeordnet werden, insbesondere können auch mehrere solcher dämpfenden Materialien 10 oder Hohlräume 11 angeordnet werden. Das dämpfende Material kann auch auf der in Fig. 5 gezeigten unteren Seite angeordnet werden.

Selbstverständlich ist die Erfindung nicht auf die gezeigten und beschriebenen Ausführungsbeispiele beschränkt.

### Bezugszeichenliste

- 1: Schottteil
- 2: Trägerteil
- 3: schäumbares Material
- 4: Clip
- 5: Vertiefung
- 6: Erhebung
- 7: Schall
- 8: reflektierter Schall
- 9: durchgelassener Schall
- 10: dämpfendes Material
- 11: Hohlraum

## Patentansprüche

1. Schottteil (1) umfassend einen Trägerteil (2) und einen Teil (3) aus einem schäumbaren Material,
**dadurch gekennzeichnet,**
**dass** der Trägerteil (2) durch eine Strukturierung (5, 6) Schall absorbiert.

2. Schottteil nach Anspruch 1,
**dadurch gekennzeichnet,**
**dass** der Trägerteil (2) mit Vertiefungen (5) und Erhebungen (6) ausgeformt ist.

3. Schottteil nach Anspruch ,
**dadurch gekennzeichnet,**
**dass** die Vertiefungen (5) und Erhebungen (6) unregelmässig angeordnet sind.

4. Schottteil nach Anspruch 2 oder 3,
**dadurch gekennzeichnet,**
**dass** die Vertiefungen (5) und Erhebungen (6) pyramidenförmig, spitz, stumpf ausgeformt sind.

5. Schottteil nach einem der vorhergehenden Ansprüche,
**dadurch gekennzeichnet,**
**dass** auf dem Trägerteil ein dämpfendes Material (10) angeordnet ist.

6. Schottteil nach einem der vorhergehenden Ansprüche,
**dadurch gekennzeichnet,**
**dass** im Trägerteil ein Hohlraum (11) angeordnet ist.

7. Schottteil nach Anspruch 6,
**dadurch gekennzeichnet,**
**dass** der Hohlraum (11) mit einem Gas, insbesondere Kohlendioxid, gefüllt ist.

8. Verfahren zur Herstellung eines Schottteils (1) umfassend einen Trägerteil (2) und einen Teil (3) aus einem schäumbaren Material,
**dadurch gekennzeichnet,**
**dass** die Oberfläche der Gussform zur Herstellung des Trägerteiles Vertiefungen und Erhebungen aufweist, und dass diese Vertiefungen und Erhebungen beim Spritzgiessen des Trägerteils auf dessen Oberfläche übertragen werden.

9. Verfahren nach Anspruch 10,
**dadurch gekennzeichnet,**
**dass** die Oberfläche der Gussform nur geschruppt wird und keine weitere Behandlung erfährt.
